# EUROPEAN PATENT SPECIFICATION

(11) **EP 3 856 519 B1**
(45) Date of publication and mention of the grant of the patent: **31.07.2024**
(21) Application number: 19783377.5
(22) Date of filing: 23.09.2019
(51) Int. Cl.: B32B 37/24, D06N 3/14, C14B 7/02, C14B 1/56, B32B 27/40

(54) **IMPROVED METHOD FOR MAKING A PRODUCT WITH AN UPGRADING LAYER AND RELATED SYSTEM**
VERBESSERTES VERFAHREN ZUR HERSTELLUNG EINES PRODUKTES MIT EINER VEREDELUNGSSCHICHT UND ENTSPRECHENDES SYSTEM
PROCÉDÉ AMÉLIORÉ DE FABRICATION D'UN PRODUIT DOTÉ D'UNE COUCHE DE VALORISATION ET SYSTÈME ASSOCIÉ

(30) Priority: 26.09.2018 IT 201800008932
(43) Date of publication of application: 04.08.2021
(73) Proprietor: AGOSTI TECH S.R.L., 36070 Trissino (VI) (IT)
(72) Inventor: AGOSTI, Giacomino Adolfo, 36070 Castelgomberto (VI) (IT)
(74) Representative: Ziliotto, Tiziano
(86) International application number: PCT/IB2019/058024
(87) International publication number: WO 2020/065490

(56) References cited:
- WO-A1-2010/131275
- WO-A1-2015/110953

## Description

### TECHNICAL FIELD OF THE INVENTION

The invention relates to a method for producing a product of the type comprising a laminar support on the visible surface of which a finishing treatment is carried out by means of an upgrading layer. In particular, the invention relates to a method for the upgrading of leather which is not first quality. The invention also concerns a system for the implementation of said method, in addition to the product obtained through said method and/or said system.

### DESCRIPTION OF THE STATE OF THE ART

It should be noted that in the remainder of the present description the word "product" designates a fake leather or an upgraded leather comprising a generally laminar support on the visible surface of which a treatment is performed which results in at least some of the aesthetic characteristics of the product. As is known, leather is widely used in many sectors, such as the automotive, furnishing, clothing and footwear sectors. Among the various types of leather, the finest and most expensive part of the same, called full grain, is particularly appreciated for its characteristics of softness and pleasantness to the touch, as well as for its aesthetic characteristics.

In order to manufacture products that are also less expensive but have particular characteristics and/or characteristics which are comparable to those of full grain leather, the known technique has proposed the use of textile and synthetic laminar products, also consisting of agglomerates of microfibers, which imitate the aesthetic appearance of natural leather while at the same time reducing production costs and improving some physical and mechanical characteristics.

Some manufacturing processes of such products essentially require the application of a film of synthetic material on a laminar support, or on low quality leather, wherein said film is obtained by drying one or more layers of polyurethane, possibly coloured.

In a process of the known type the hide, which constitutes the laminar support, is treated in a first part of a suitable system by applying a layer of a synthetic material typically consisting of polyurethane. This layer is obtained by applying said synthetic material in a fluid or liquid form using, for example, spray booths or roller buffers.

In a second part of the system a supporting element is provided which has an embossed surface on which a layer of a substance is applied, for example a polyurethane resin.

The embossed surface, as is known, is a non-smooth surface comprising projections and recesses the spatial arrangement of which creates the negative of the desired surface appearance to be given to the upgrading surface.

The polyurethane resin is deposited on the embossed surface in such a way as to obtain a predetermined thickness which substantially covers the projections and recesses of the embossed surface in a uniform manner.

The hide with the synthetic material and the supporting element with the embossed surface provided with the layer of polyurethane resin are then coupled together so as to place the synthetic material in contact with the polyurethane resin.

The hide and the supporting element are then pressed against each other, so as to press the synthetic material and the layer of polyurethane resin together. This process is followed by a step of setting (polymerization) of the two materials.

The supporting element with the embossed surface is then removed and the remaining part comprised of the hide with the polymerized synthetic material and polyurethane resin layer, on which the pattern present on the embossed surface has been transferred, defines the desired upgraded end product.

However, the prior art has some limitations and drawbacks.

A first drawback of the prior art lies in that the upgraded layer of the final product obtained with the known manufacturing process undergoes undesired, often irreversible alterations when the product itself is folded and/or stretched, even during its normal use.

In particular, the layer of polyurethane resin which is removed from the embossed surface of the supporting element and subsequently polymerized undergoes such undesired alterations when the product is folded and/or stretched. More particularly, the relative position of the projections and recesses defined on the polyurethane resin layer and corresponding to the respective projections and cavities of the embossed surface is altered when the product is folded and/or stretched, without returning to its original condition.

This results in an unacceptable deterioration of the final product, in the form of wrinkles.

The present invention intends to overcome these drawbacks.

More specifically, it is a first object of the invention to provide a method and a relative system which make it possible to manufacture a product that is softer and more pleasant to the touch compared to similar products made with the known techniques.

It is another object of the invention to provide a method and a relative system which make it possible to manufacture a product that, compared to similar products made with the known techniques, is even closer to the characteristics of full grain leather.

It is a further object of the invention to provide a method and a system which make it possible to reduce the production times of the product compared to the known methods and systems.

It is a further object of the invention to provide a method and a system which make it possible to reduce the production costs of the product compared to the known methods and systems.

It is another object of the invention to provide a method and a system which, compared to the known methods and systems, make it possible to increase the quantity of product obtainable per unit of time.

Methods for making a product comprising a laminar support and an upgrading layer according to the prior art are known, for instance, from documents WO 2010/131275 A1 and WO 2015/110953 A1.

### SUMMARY OF THE INVENTION

The invention is defined by the independent claims.

According to a first aspect, the subject of the same is a method for making a product comprising a laminar support and an upgrading layer, wherein the method comprises the following steps:
a) preparing a supporting element provided with a non-smooth embossed surface comprising projections and recesses;
b) applying a layer of a first substance on the embossed surface, in such a way as to cover said projections and said recesses;
c) removing at least a part of said first substance from said embossed surface, leaving a residual quantity of said first substance on said embossed surface;
d) moving said supporting element provided with said embossed surface near said laminar support and placing said residual quantity of said first substance in contact with said laminar support;
e) applying pressure to said supporting element and/or to said laminar support, in such a way as to press said residual quantity of said first substance against said laminar support;
f) making said residual quantity of said first substance set at least partially;
g) removing said embossed surface from said residual quantity of said previously set first substance.

In a preferred embodiment, the operation of removing said first substance from said embossed surface results in the removal of said first substance at the level of said projections, while said residual quantity of said first substance covers said recesses of said embossed surface.

According to the invention, the method comprises at least one step c1) in which said residual quantity of said first substance is subjected to a heat treatment in order to make said residual quantity of said first substance at least partially set after said step c) and before said step d).

According to the invention, steps b), c) and c1) of the method are repeated two or more times before the execution of the subsequent steps.

In a preferred embodiment, before said step d) there is a step in which at least one layer of a second substance is applied to the laminar support surface to be finished and said at least one layer of said second substance is treated in such a way that said second substance has an absolute humidity value included between 12% and 25%, while in said step d) said supporting element provided with said embossed surface is brought near said laminar support and said residual quantity of said first substance is placed in contact said second substance.

Preferably, in step f) the union of said residual quantity of said first substance and said second substance sets.

According to a preferred embodiment, step g) consists in the removal of said embossed surface from said residual quantity of said previously set first substance and second substance.

In a preferred embodiment, said absolute humidity value is included between 15% and 23%, more preferably included between 17% and 22% and even more preferably equal to 18%.

Preferably, said operation of treating said at least one layer of said second substance so that said second substance has said absolute humidity value is obtained by heating said second substance.

According to a preferred embodiment, the method provides for applying pressure to said supporting element and/or to said laminar support so as to press said first substance against said second substance, wherein said pressure has a value included between 10 atm and 50 atm, more preferably a value equal to 25 atm.

According to a preferred embodiment, said setting step is carried out by heating said first substance and said second substance to a given temperature, wherein said temperature has a value included between 70°C and 100°C, more preferably a value equal to 80°C.

In a preferred embodiment, said steps d), e) and f) of the method are carried out simultaneously.

In another preferred embodiment, said steps e) and f) of the method are carried out after said step d).

According to a preferred embodiment, the method comprises a further step of making said first substance set after said steps d), e) and f).

Said first substance preferably comprises a polyurethane substance.

Said second substance preferably comprises a mixture of acrylic and polyurethane resins in aqueous dispersion.

According to another aspect, the same concerns a system for making a product comprising a laminar support and an upgrading layer, wherein said system comprises:
- at least two or more first application means designed to apply at least one layer of a first substance to the embossed surface of a supporting element;
- at least two or more removal means designed to remove at least a part of said first substance from said embossed surface, leaving a residual quantity of said first substance on said embossed surface;
- at least two or more heating means suited to subject said residual quantity of said first substance to a heat treatment intended to make said residual quantity of said first substance at least partially set,
- conveyor means designed to move said supporting element provided with said embossed surface near said laminar support and to place said residual quantity of said first substance in contact with said laminar support;
- pressing means designed to apply pressure to said supporting element and/or to said laminar support in such a way as to press said residual quantity of said first substance against said laminar support;
- setting means designed to make said first substance set.

Preferably, the system further comprises means for the heat treatment of the residual quantity of said first substance on the embossed surface.

According to a further aspect, the same concerns a product comprising a laminar support and an upgrading layer obtained by means of the method described above or the system described above.

### BRIEF DESCRIPTION OF THE DRAWINGS

Further advantages, objectives and characteristics as well as other embodiments of the present invention are defined in the claims and will be clarified below by means of the following description, in which reference is made to the attached drawings; in the drawings, corresponding or equivalent characteristics and/or component parts of the present invention are identified by the same reference numbers. More specifically, in the drawings:
- Figure 1 schematically shows the various operations of a method applied to a system;
- Figure 1A shows an enlarged detail of Figure 1;
- Figure 1B shows another enlarged detail of Figure 1;
- Figure 2 shows an axonometric view of an element used in the system of Figure 1;
- Figure 3 shows an enlarged detail of a first part of the system of Figure 1;
- Figures from 3A to 3C show enlarged details of Figure 3;
- Figure 4 shows a variant embodiment of the part of the system shown in Figure 3;
- Figures from 4A to 4C show enlarged details of Figure 4;
- Figure 5 shows a detail of a variant embodiment of the system shown in Figure 1;
- Figure 6 shows a variant embodiment of the system and of the related method of Figure 1;
- Figure 7 shows another variant embodiment of the system and of the related method of Figure 1 in a first operating position;
- Figure 8 shows the system of Figure 7 in a second operating position;
- Figure 9 shows a further variant embodiment of the system and of the related method of Figure 1;
- Figure 10 shows a variant embodiment of Figure 2;
- Figure 11 shows a detail of a side plan view of Figure 10.

### DETAILED DESCRIPTION

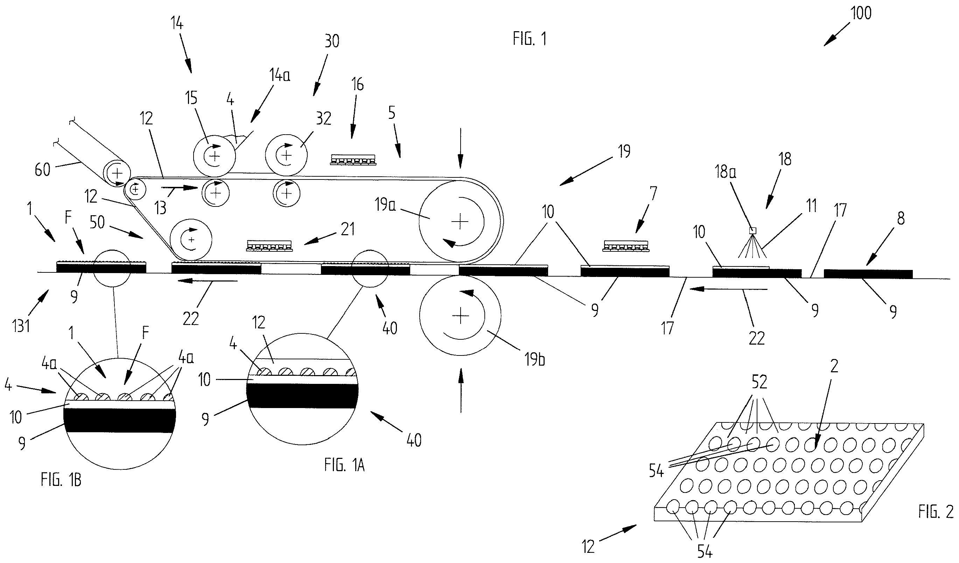

A preferred embodiment of a continuous method for making a product 1 comprising a laminar support 9 and an upgrading layer F will now be described with reference to the example diagram of the system 100 shown in Figure 1. According to a preferred embodiment, the method substantially provides for creating at least one upgrading layer F on a surface 8 of the laminar support 9. Preferably, in the final product 1 the upgrading layer F reproduces the desired surface aesthetic characteristics that correspond to the surface characteristics of an embossed surface 2.

In the example of embodiment of the proposed method, the embossed surface 2 is defined superficially on a supporting element 12, shown in particular in Figure 2. In the embodiment described herein, for the sake of simplicity the embossed surface 2 is shown by way of example as provided with a series of sunken half-spheres with exaggerated dimensions compared to the actual dimensions. In actual application, the embossed surface will have a special configuration suited to obtain the desired surface effect, for example a leather effect for bags, vests, belts, etc., and thus with reduced real dimensions compared to what is shown herein.

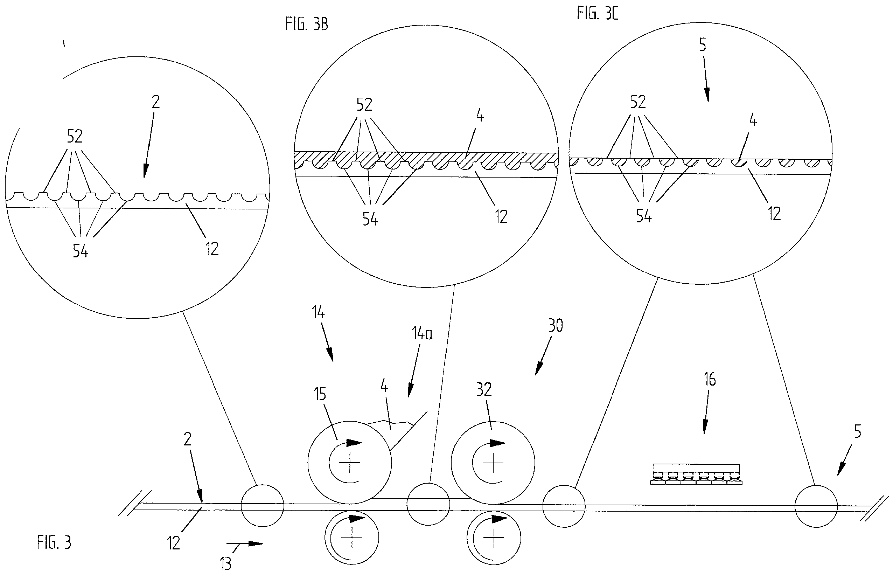

In general, the embossed surface is defined by a non-smooth surface comprising projections and recesses. In the particular example of an embossed surface with sunken half-spheres, these projections 52 and recesses 54 are shown in Figures 2 and 3A.

It should also be noted that for ease of description the thicknesses and/or dimensions of the various layers in the figures are merely indicative, as are the proportions between them.

In particular, the enlargements shown in Figures 1A, 1B, 3A, 3B and 3C are exaggerated on purpose in order to facilitate better understanding.

In the system 100 of Figure 1, the supporting element 12 with the embossed surface 2 is a closed loop and is moved forward in a first part of the system 100 along a rectilinear direction 13.

In said first part of the system 100 and above said supporting element 12 there are first application means 14 designed to apply a first substance 4.

In the present case, said first application means 14 comprise a rotating application cylinder 15 fed by a first tank 14a containing the aforementioned first substance 4. The first substance 4 is preferably in liquid form or in any case has such viscosity as to allow the application of a homogeneous layer on the supporting element 12, as better illustrated in Figure 3B. The first substance 4 is laid over the embossed surface 2 in such a way as to have a predetermined thickness and substantially cover recesses 54 and projections 52 evenly.

In other preferred embodiments, the first application means may comprise different systems such as, for example, doctor blade coating systems or spray systems or the like, also known in and of themselves.

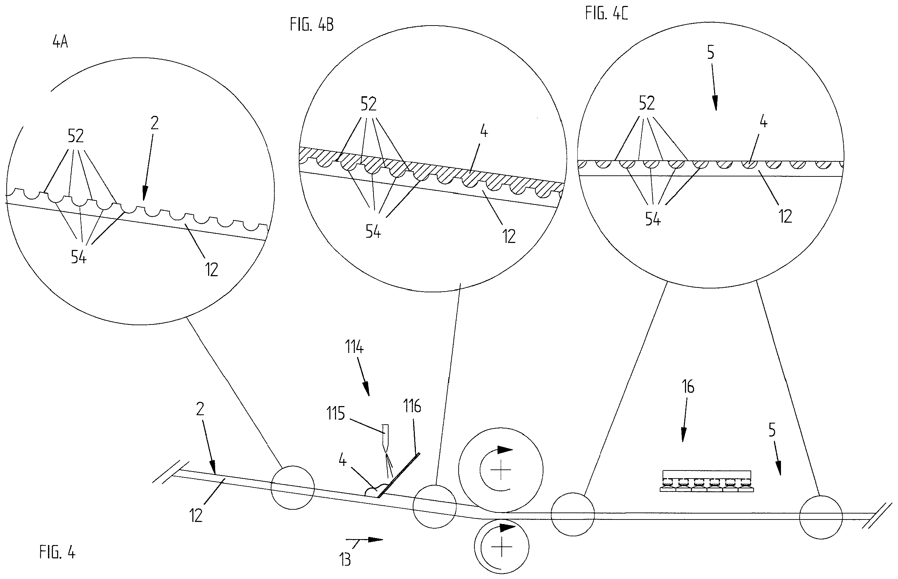

By way of example, Figure 4 shows one of such variant embodiments of the first application means 114, wherein the first substance 4 is deposited on the embossed surface 2 of the supporting element 12 by means of a nozzle 115 and a doctor blade 116 positioned above the embossed surface 2 and spaced so as to define a predetermined thickness of the first substance 4 on the embossed surface 2.

In a preferred embodiment, the first substance 4 preferably comprises a polyurethane substance.

Preferably, the first substance 4 is transparent.

In other embodiments, the first substance may be made of suitable emulsions.

According to an aspect, the supporting element 12 with the layer of said first substance 4 deposited on it is subjected to an operation during which at least a part of the first substance 4 is removed from the embossed surface 2, leaving a residual quantity of said first substance 4 on the embossed surface 2 itself.

More preferably, the removal of the first substance 4 from the embossed surface 2 results in the complete removal of the first substance 4 at the level of the projections 52, while the residual amount of said first substance 4 covers the recesses 54 of the embossed surface 2, as shown in the detail of Figure 3C.

In the preferred embodiment shown in Figure 1, said removal takes place through a removal unit 30 comprising a rotating roller 32 whose outer surface is as smooth as possible and rotates in the opposite direction with respect to the forward direction 13 of the supporting element 12 with the layer of the first substance 4 deposited on it.

In alternative embodiments, the removal unit could be made differently, for example by means of a blade/doctor blade which acts on the upper part by scraping the first substance 4 away from the embossed surface 2.

The supporting element 12 with the residual quantity of the first substance 4 which covers the recesses 54 is then preferably subjected to a heat treatment through heating means 16 positioned downstream of the removal unit 30. During this phase, the first substance 4 is subjected to at least partial setting/polymerization.

In a preferred alternative embodiment, said heat treatment step as well as the relative heating means could be omitted.

The laminar element 5 leaving the heating means 16 is made up of the supporting element 12 with the residual amount of the partially set/polymerized first substance 4, as shown in the detail of Figure 3C.

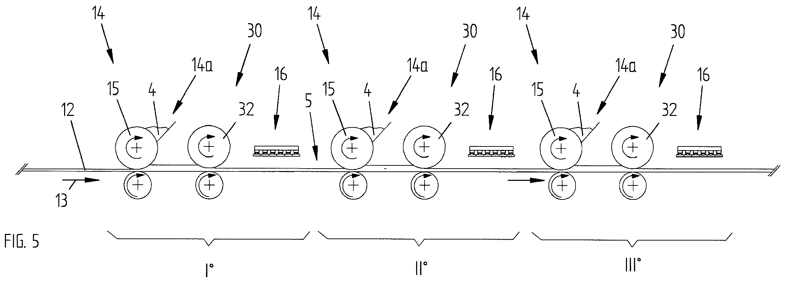

In a further preferred embodiment, illustrated schematically in Figure 5, the aforementioned steps of applying a layer of said first substance 4 on the embossed surface 2, preferably by means of first application means 14, of removing said first substance 4, preferably through a removal unit 30, and of thermally treating the residual quantity of the first substance 4, preferably through heating means 16, are performed sequentially several times, preferably three times (these sequences being indicated with the references I, II and III in Figure 5).

This repetition of steps advantageously makes it possible to obtain a laminar element 5 in which the residual quantity of the first substance 4 fills the recesses 54 of the embossed surface 2 of the supporting element 12 as homogeneously as possible.

Even in this case, in a preferred alternative embodiment the heat treatment step as well as the relative heating means could be omitted.

As far as the laminar support 9 is concerned, in this case it is made of leather, even of low quality. The hide 9 is placed on a conveyor belt 17 which moves it forward along a rectilinear direction 22 towards second application means 18 designed to apply a second substance 11, which will constitute a layer of synthetic substance 11 in the final product 1.

In other embodiments, the laminar support may be of a different type, for example the split leather resulting from the processing of hides, and in general can be constituted by supporting elements to be upgraded which at the end of the treatment will have special characteristics and/or characteristics that are comparable to those of full grain leather.

The second application means 18 preferably comprise a plurality of spray nozzles 18a fed by a special tank, not shown, containing the synthetic substance 11. In other embodiments, said second application means 18 may comprise a nebulizer which directs the product onto the surface 8 to be treated, or a brush or doctor blade or roller systems or equivalent systems, also of the type known per se and therefore not described herein.

According to a preferred embodiment of the method, the synthetic substance 11 comprises a polyurethane resin.

In other embodiments, the synthetic substance may be of a different type, for example an acrylic resin or a butadiene resin.

Moreover, preferably, the synthetic substance is of the colored type, for example comprising coloring pigments. The color is preferably chosen based on the desired aesthetic appearance of the final product 1.

The synthetic substance 11 is preferably in liquid form or in any case has such viscosity as to allow the application of a homogeneous layer on the upper surface 8 of the hide 9.

The thickness of the synthetic substance 11 preferably has a value included between 0.2 mm and 0.7 mm, more preferably a value included between 0.3 mm and 0.55 mm and even more preferably a value equal to 0.4 mm.

At the time of its application with the second application means 18, the resin 11 has an adequate viscosity value. This viscosity preferably has a value included between 3 and 8 minutes, using a Ford Cup viscometer as a measuring instrument.

Moreover, at the time of its application with the second application means 18 said resin 11 has a high humidity value, substantially around 70÷80%.

The hide 9 with the layer 10 of resin 11 is subsequently subjected to a thermal treatment by conveying it towards suitable heat treatment means 7.

During the thermal treatment, substantially a heating treatment, the resin 11 is subjected to setting/polymerization and its characteristic parameters are gradually modified.

The heat treatment is preferably carried out in such a way that the resin 11 does not polymerize completely, that is, so that it does not dry up completely.

Preferably, the heat treatment is carried out in such a way that at the end of the treatment the resin 11 has an absolute humidity value included between 12% and 25%, preferably included between 15% and 23%, more preferably included between 17% and 22% and still more preferably equal to 18%.

The expression "absolute humidity" is used to indicate the water content of the material, expressed as a percentage of the total weight of the material itself.

Preferably, the desired absolute humidity parameter is obtained by controlling the heating time to which the resin 11 is subjected.

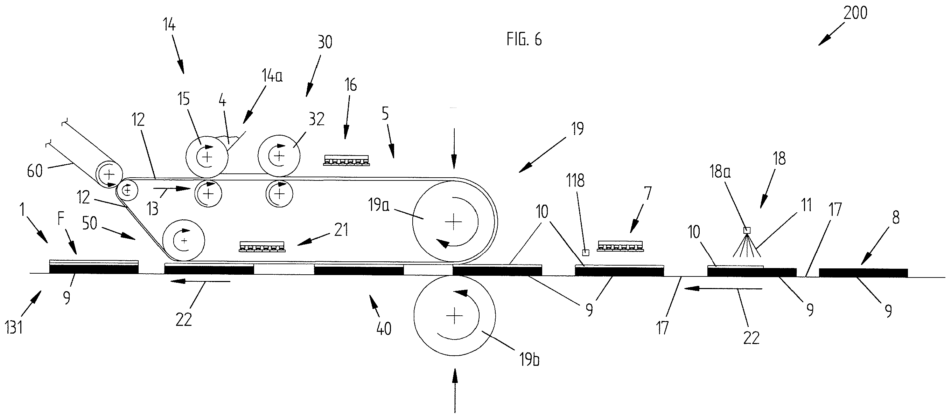

In other embodiments, the desired absolute humidity parameter is obtained by controlling it by means of suitable control means 118 associated with the heating means 7, as shown schematically in the variant embodiment of the system 200 of Figure 6. The system 200 shown in Figure 6 differs from the system 100 shown in Figure 1 only due to the presence of said control means 118. Preferably, the control means 118 comprise a solid materials moisture meter suited to detect the absolute humidity value of the resin 11 downstream of the heating means 7.

In particular, the moisture meter used to measure the absolute humidity value of the resin 11 is the "AQUA-PICCOLO" moisture meter by the German company KPM (KP Mundinger GmbH).

In other embodiments, the desired absolute humidity value can be deduced by controlling other significant parameters, for example by controlling the duration of the treatment and the temperature at which the resin 11 is treated, or even by means of experimental tests suited to empirically set the temperature and duration parameters of the treatment to which the resin 11 is subjected.

The coupling between the laminar element 5 and the support 9 with the layer 10 of resin 11 is carried out by means of a coupling assembly, indicated as a whole by the numeral 19, positioned downstream of the heating means 16 and the heat treatment means 7. The coupling assembly 19 comprises, in this case, a pair of cylinders 19a, 19b which operate in such a way as to place the first substance 4 of the laminar element 5 in contact with the layer 10 of resin 11 present on the upper surface 8 of the hide 9.

The pair of cylinders 19a, 19b preferably operates in such a way as to press the laminar element 5 against the layer of resin 11 present on the upper surface 8 of the hide 9 with a pressure P and at a temperature T.

For this purpose, the pair of cylinders 19a, 19b can be positioned at a predetermined mutual distance in order to exert the desired pressure P and is provided with heating means suited to bring the pressed assembly to the desired temperature T.

In a preferred embodiment, the heating means comprise heating means suited to heat the outer surface of one or both of the cylinders 19a, 19b.

In other embodiments, the heating means can be made differently, for example by providing electrical resistances in the vicinity of the coupling area or by positioning the cylinders inside an oven.

Moreover, the forward speed V of the conveyor belt 17 which advances the assembly along the rectilinear direction 22 between the two cylinders 19a, 19b is suitably controlled to favor the proper mutual coupling of the first substance 4 with the layer 10 of resin 11.

Preferably, said exerted pressure P has a value included between 10 atm and 50 atm, more preferably a value equal to 25 atm.

Preferably, said temperature T has a value included between 70°C and 100°C, more preferably a value equal to 80°C.

Preferably, the forward speed V of the belt has a value included between 5 m/minute and 10 m/minute.

In a preferred embodiment, for example, the supporting element advances in the 10 m long oven at a speed of 8 m/minute with the oven at a temperature of 120°C.

In another preferred embodiment, for example, the supporting element makes two trips inside a 10 m long oven at a speed of 10 m/minute with the oven at a temperature of 130°C.

During said coupling step the first substance 4 is transferred on the layer 10 of resin 11 from the embossed surface 2, reproducing the morphological characteristics of the embossed surface 2 itself. The pattern defined by the embossed surface 2 is actually reproduced on the layer 10 of resin 11 in negative. In some circumstances it has been observed that the absolute humidity of the resin 11 also gives such a consistency as to also allow the reproduction of the pattern of the embossed surface 2 on the resin itself.

At the outlet of the coupling assembly 19, therefore, a semi-finished product 40 will be obtained, shown in detail in Figure 1A, comprising the layer constituted by the hide 9, the layer 10 of resin 11, the first substance 4 and the supporting element 12.

During the coupling operation, the layer 10 of resin 11 and the first substance 4 also undergo a further polymerization process, due to the heating effect, which results in complete setting.

Advantageously and preferably, the semi-finished product 40 is subjected to a further operation aimed at favoring the complete polymerization and/or drying and at making the layer 10 of resin 11 and the first substance 4 on the supporting element 9 set further.

This operation preferably comprises the use of further heating means 21, for example an oven.

In variant embodiments, however, said further heating means may not be present. At the outlet of the further heating means 21, the result will therefore be the product made up of the supporting element 9 (hide) provided with the upgrading film F, consisting of the layer 10 of resin 11 and the first substance 4, and finally of the supporting element 12.

Downstream of the heating means 21 and in the vicinity of the unloading area 131, a separation unit 50 is preferably located, designed to separate the supporting element 12 from the product 1, so that the former is ready for subsequent use starting from the first application means 14.

In a variant embodiment, this separation can be carried out manually, without using said separation unit.

Before passing under the first application means 14, the embossed outer surface 2 of the supporting element 12 leaving the separation unit 50 is advantageously cleaned of any residual quantity of the first substance 4 which was not transferred on and/or has not covered portions of the hide 9. Said cleaning operation is preferably performed by making the embossed outer surface 2 of the supporting element 12 adhere to an adhesive tape 60 which removes the residual substance.

In variant embodiments, the supporting element 12, instead of winding in a loop in the system 100, as shown herein, is wound on a suitable winding cylinder at the end of use and recovered for its possible re-use.

At the outlet of the separation unit 50, therefore, the desired final product 1 will be made up of the supporting element 9 (hide) provided with the upgrading film F consisting of the layer 10 of resin 11 and the first substance 4.

In particular, the first substance 4 appears in the final product 1 in the form of a series of projections 4a, corresponding to the recesses 54 of the embossed surface 2. Said projections 4a are separate and independent of one another, contrary to what happens in the known art, in which the adjacent parts in relief of the first substance are in any case joined together by a layer of the first substance itself.

Advantageously, the independent arrangement of the projections 4a in the final product 1 prevents undesired alterations when it is folded and/or stretched.

Said projections return to their original position when the product is released, preventing the creation of wrinkles.

Moreover, advantageously, the final product 1 will be made of leather that is pleasant to the touch and soft, with no need for further steps for staking or drumming as provided for by conventional methods of the known type.

Depending on the needs of the client, the final product 1 may be subjected to further processing steps to provide the desired opacity and/or gloss and/or softness.

Still advantageously, the steps for obtaining the final product 1 are reduced with respect to the systems known in the art. Moreover, all the processing steps can be carried out within the same system 100, with no need to resort to handling and/or storage and/or transport to third parties to carry out other processing. This increases the production speed and therefore reduces production costs.

In the described embodiment, moreover, the system 100 makes it possible to obtain a continuous processing cycle, with particular benefits in terms of production speed, reduced overall dimensions of the system and therefore lower costs related to production and/or to the construction of the system.

In particular, in the system 100 according to the preferred embodiment, the coupling assembly 19 which joins the supporting element 12 provided with the layer of the first substance 4 to the hide 9 provided with the layer 10 of resin 11 operates in such a way as to carry out the operations of coupling, pressing and heat treatment substantially at the same time and continuously, while the two rollers 19a, 19b rotate and the conveyor belt 17 moves forward. As noted above, the control of the aforementioned parameters of speed V, pressure P and temperature T is critical to obtain the desired characteristics of the final product 1.

In variant embodiments, however, one or more steps of the method may be carried out at different times.

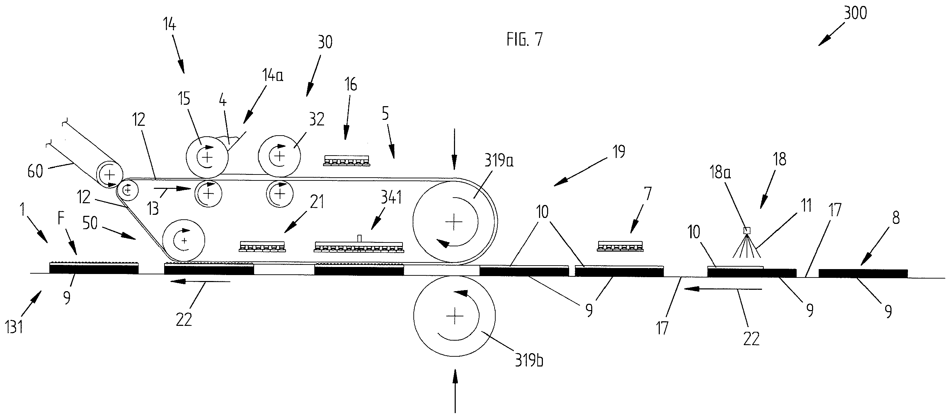

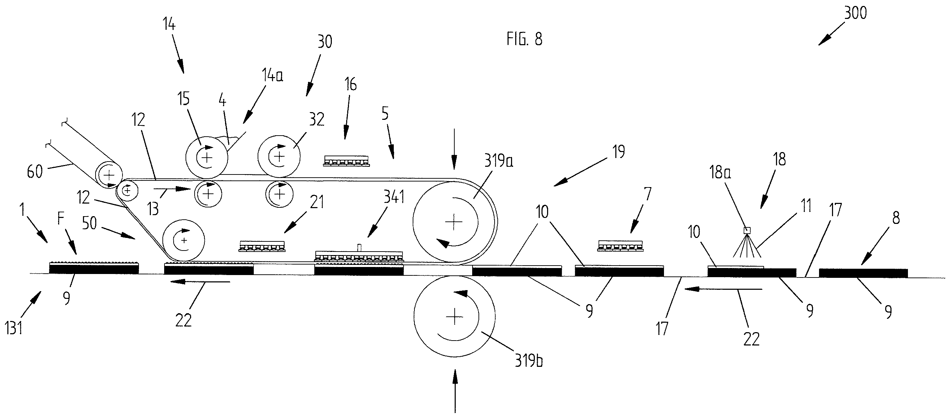

By way of example and with reference to the variant embodiment of the system 300 shown in Figures 7 and 8, the step of placing the laminar element 5 on the hide 9 provided with the layer 10 of resin 11 takes place at a time prior to the pressing and the heat treatment.

For this purpose, the coupling assembly 319 comprises two rotating cylinders 319a, 319b which place the laminar element 5 on the hide 9 provided with the layer 10 of resin 11 and a subsequent pressing and heating unit 341 acts on the assembly with a specified pressure, at a predetermined temperature for a predetermined period of time, according to the configuration shown in Figure 8, in which the pressing and heating unit 341 is in the closed operating position.

The pressing and heating unit 341 preferably comprises a heated vertical press. Obviously, in this embodiment, during the pressing and heat treatment step the conveyor belt 17 and the supporting element 12 closed in a loop will be stopped to allow treatment by means of the vertical press 341, to successively continue with the subsequent assembly.

Advantageously, the final product is obtained using completely different and lower temperatures and pressures compared to those used in the systems known in the art. This makes it possible to avoid affecting the softness and thickness of the laminar support constituted by the leather to be upgraded in any manner.

It should be noted that in all the embodiments described above, during the coupling operation the pressure and/or temperature values may not be constant or substantially constant but varied according to appropriate functions that vary over time to better polymerize and stabilize the resin.

As far as the support 9 is concerned, it can also be indifferently made of a natural or synthetic textile element, or of natural leather, even of the full grain type.

Moreover, in a further variant embodiment, the second application means 18 may also comprise a unit designed to detect the geometric shape of the surface of the supporting element 9.

Said unit, substantially of the known type, comprises systems for acquiring and processing images which cooperate with a control unit to control the activation and deactivation of the second application means 18, thus minimizing the consumption of the synthetic substance 11 applied.

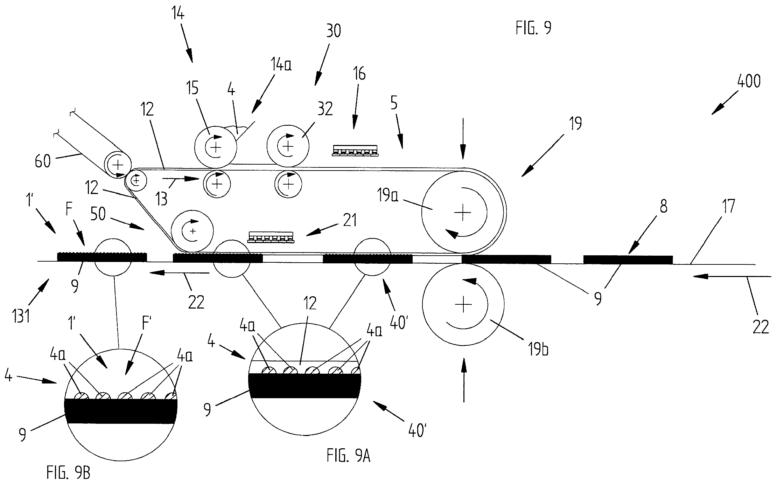

A preferred variant of the continuous method for making a product 1' comprising a laminar support 9 and an upgraded part F' is described below with reference to the variant of the system 400 shown in Figure 9.

In the system 400, elements corresponding or equivalent to the previously described embodiments are identified by the same reference numerals.

According to said preferred embodiment, the method substantially provides for applying an upgrading part F' on a surface 8 of the laminar support 9.

Preferably, in the final product 1' the upgrading part F' reproduces the desired surface aesthetic characteristics corresponding to the surface characteristics of an embossed surface 2.

The variant embodiment of the proposed method differs from the method previously described in that the upgrading part F' of the final product 1' is obtained by transferring the first substance 4 from the embossed surface 2 of the supporting element 12 directly onto the surface 8 of the laminar support 9.

The initial steps for the preparation of the laminar element 5 leaving the heating means 16 are the same as previously described with reference to Figure 1, in which the laminar element 5 is made up of the supporting element 12 with the residual quantity of the partially set/polymerized first substance 4, as already shown in detail in Figure 3C.

Said embodiment differs from the embodiment illustrated in Figure 1 in that the laminar support 9 (hide) is placed on the conveyor belt 17 which moves it forward along a rectilinear direction 22 directly towards the coupling assembly 19, that is, without the application of any substance on it.

The coupling between the laminar element 5 and the laminar support 9 is achieved by means of the coupling assembly 19, wherein the pair of cylinders 19a, 19b operate in such a way as to place the first substance 4 of the laminar element 5 in contact with the upper surface 8 of the hide 9.

The pair of cylinders 19a, 19b preferably operate in such a way as to press the laminar element 5 against the upper surface 8 of the hide 9 with a pressure P' and at a temperature T'.

For this purpose, the pair of cylinders 19a, 19b can be positioned at a predetermined mutual distance to exert the desired pressure P' and are provided with heating means designed to bring the pressed assembly to the desired temperature T'.

In a preferred embodiment, the heating means comprise heating means suited to heat the outer surface of one or both of the cylinders 19a, 19b.

In other embodiments, the heating means can be made differently, for example by providing electrical resistances in the vicinity of the coupling area or by positioning the cylinders inside an oven.

Moreover, the forward speed V of the conveyor belt 17 which advances the assembly along the rectilinear direction 22 between the two cylinders 19a, 19b is suitably controlled in order to favor the correct mutual coupling of the first substance 4 with the upper surface 8 of the hide 9.

Preferably, said pressure P' exerted has a value included between 10 atm and 50 atm, more preferably a value equal to 25 atm.

Preferably, said temperature T' has a value included between 70°C and 100°C, more preferably a value equal to 80°C.

Preferably, the forward speed V of the belt has a value included between 5 m/minute and 10 m/minute.

In a preferred embodiment, for example, the supporting element advances in the 10 m long oven at a speed of 8 m/minute with the oven at a temperature of 120°C.

In another preferred embodiment, for example, the supporting element makes two trips inside a 10 m long oven at a speed of 10 m/minute with the oven at a temperature of 130°C.

During the coupling step the first substance 4 is transferred onto the upper surface 8 of the hide 9 from the embossed surface 2, reproducing the morphological characteristics of the embossed surface 2 itself.

At the outlet of the coupling assembly 19, therefore, a semi-finished product 40' will be obtained, shown in detail in Figure 9A and comprising the layer constituted by the hide 9, the first substance 4 and the supporting element 12.

During the coupling operation, the first substance 4 undergoes a further polymerization process, due to the heating effect, which results in complete setting.

Advantageously and preferably, the semi-finished product 40' is subjected to a further operation aimed at favoring the complete polymerization and/or drying and at making the first substance 4 set further.

Said operation preferably comprises the use of further heating means 21, for example an oven.

In variant embodiments, however, said further heating means may not be present. At the outlet of the further heating means 21, the product obtained will therefore be made up of the supporting element 9 (hide) provided with the upgrading film F', consisting of the first substance 4, and of the supporting element 12.

Downstream of the heating means 21 and in the vicinity of the unloading area 131 there is a separation unit 50 suited to separate the supporting element 12 from the product 1, so that the former is ready for subsequent use starting from the first application means 14.

Before passing under the first application means 14, the embossed outer surface 2 of the supporting element 12 leaving the separation unit 50 is advantageously cleaned of any residual first substance 4 which was not transferred to and/or has not covered portions of the hide 9. Said cleaning operation is preferably performed by making the embossed outer surface 2 of the supporting element 12 adhere to an adhesive tape 60 which removes the residual substance.

At the outlet of the separation unit 50, therefore, the desired final product 1' will be constituted by the supporting element 9 (hide) provided with the upgrading film F made of the first substance 4.

In particular, the first substance 4 appears in the final product 1' in the form of a series of projections 4a, corresponding to the recesses 54 of the embossed surface 2. Said projections 4a are separate and independent of one another, contrary to what happens in the known art, in which the adjacent parts of the first substance in relief are in any case joined together by a layer of the first substance itself.

Advantageously, the independent arrangement of the projections 4a in the final product prevents undesired alterations when it is folded and/or stretched.

Said projections return to their original position when the product is released, preventing the creation of wrinkles.

Moreover, advantageously, the final product 1' will be made of leather that is pleasant to the touch and soft, with no need for further steps for staking or drumming as provided for in conventional methods of the known type.

In a variant embodiment of the method for making the product as described with reference to Figure 9, the laminar support 9 (hide) may be subjected to a pretreatment before being conveyed towards the coupling assembly 19. Said pretreatment may include, for example, the application of a layer of a heat-adhesive substance. The application of this substance may take place within the same system or, alternatively, at a remote station.

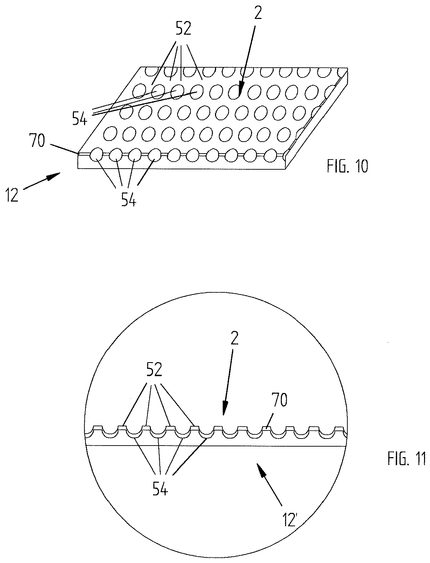

Figures 10 and 11 show a variant embodiment of a supporting element 12' which can be used in a system to obtain a product 1, 1' as previously described.

The supporting element 12' according to said embodiment differs from the supporting element 12 previously described in that it comprises a further layer 70 at the top, at the level of the embossed surface 2. Said layer preferably comprises a layer 70 of a so-called release material and has a thickness preferably included between 0.01 mm and 0.03 mm, more preferably a thickness equal to 0.02 mm.

Said layer 70 preferably comprises a polyurethane material or a filler in aqueous dispersion.

According to the description provided above, during the use of the supporting element in the system for the production of the final product 1, 1' said layer 70 receives the first substance 4 on the upper part. Advantageously, thanks to its detaching property, the additional layer 70 favors the complete transfer of the first substance 4 during the previously described steps and further favors the separation of the supporting element from the final product 1, 1' at the separation unit 50.

It is clear that the above described arrangement of the various units within the system is obviously described by way of example, since the components and means that perform the various operations may be different and more than one, and also be present in any number within the system.

For example, the number of heat treatment means and/or the number of heating means may vary.

It should also be noted that further devices or machines may also be positioned among the various parts of the system to carry out special processing or obtain particular effects.

It is clear from the above that the proposed method and system achieve the set objects.

In particular, it is clear that the proposed solution makes it possible to manufacture a product of the type described above improving its softness and pleasantness to the touch and reducing production costs.

## Claims

1. Method for making a product (1; 1') comprising a laminar support (9) and an upgrading layer (F), the method comprising the following steps:
a) preparing a supporting element (12) provided with an embossed surface (2) which is not smooth and comprises projections (52) and cavities (54);
b) applying a layer of a first substance (4) on the embossed surface (2), in such a way as to cover said projections (52) and said cavities (54);
c) carrying out a removal operation to remove at least a part of said first substance (4) from said embossed surface (2), leaving a residual quantity of said first substance (4) on said embossed surface (2);
c1) subjecting said residual quantity of said first substance (4) to a heat treatment intended to make said residual quantity of said first substance (4) at least partially set after said step c) and before step d),
d) moving said supporting element (12) provided with said embossed surface (2) near said laminar support (9) and placing said residual quantity of said first substance (4) in contact with said laminar support (9);
e) applying a pressure (P) to said supporting element (12) and/or to said laminar support (9) in such a way as to press said residual quantity of said first substance (4) against said laminar support (9);
f) making said residual quantity of said first substance (4) set ;
g) removing said embossed surface (2) from said residual quantity of said previously set first substance (4),
**characterized in that**
said steps b), c) and c1) are repeated two or more times before carrying out the successive steps.

2. Method according to claim 1, **characterized in that** said operation of removing said first substance (4) from said embossed surface (2) determines the removal of said first substance (4) at the level of said projections (52), while said residual quantity of said first substance (4) covers said cavities (54) of said embossed surface (2).

3. Method according to any of the preceding claims, **characterized in that** before said step d) a step is carried out in which at least one layer (10) of a second substance (11) is applied to the surface to be finished (8) of said laminar support (9) and said at least one layer (10) of said second substance (11) is treated in such a way that said second substance (11) has an absolute humidity value included between 12% and 25%, **wherein** in said step d) said supporting element (12) provided with said embossed surface (2) is moved near said laminar support (9) and said residual quantity of said first substance (4) is placed in contact with said second substance (11).

4. Method according to claim 3, **characterized in that** said step f) comprises the setting of the union between said residual quantity of said first substance (4) and said second substance (11).

5. Method according to claim 4, **characterized in that** said step g) comprises the removal of said embossed surface (2) from said previously set residual quantity of said first substance (4) and second substance (11).

6. Method according to any of the claims from 3 to 5, **characterized in that** said absolute humidity value is included between 15% and 23%, more preferably included between 17% and 22% and even more preferably equal to 18%.

7. Method according to any of the claims from 3 to 6, **characterized in that** said operation of treating said at least one layer (10) of said second substance (11) in such a way that said second substance (11) has said absolute humidity value is carried out by heating said second substance (11).

8. Method according to any of the claims from 3 to 7, **characterized in that** a pressure (P) is applied to said supporting element (12) and/or to said laminar support (9) in such a way as to press said first substance (4) against said second substance (11), wherein the value of said pressure (P) is included between 10 atm and 50 atm, more preferably is equal to 25 atm.

9. Method according to any of the claims from 4 to 8, **characterized in that** said setting step is carried out by heating said first substance (4) and said second substance (11) at a temperature (T), **wherein** the value of said temperature (T) is included between 70°C and 100°C, more preferably is equal to 80°C.

10. Method according to any of the preceding claims, **characterized in that** said steps d), e) and f) are carried out simultaneously.

11. Method according to any of the claims from 1 to 9, **characterized in that** said steps e) and f) are carried out after said step d).

12. Method according to any of the preceding claims, **characterized in that** it comprises a further step of setting of said first substance (4) after said steps d), e) and f).

13. Method according to any of the preceding claims, **characterized in that** said first substance (4) comprises a polyurethane-based substance.

14. Method according to any of the claims from 3 to 13, **characterized in that** said second substance (11) comprises a mixture of acrylic and polyurethane resins in aqueous dispersion.

15. System for making a product (1; 1') comprising a laminar support (9) and an upgrading layer (F; F'), the system comprising:
- at least two or more application means (14) designed to apply at least one layer of a first substance (4) to the embossed surface (2) of a supporting element (12);
- at least two or more removal means (30) designed to remove at least a part of said first substance (4) from said embossed surface (2), leaving a residual quantity of said first substance (4) on said embossed surface (2);
- at least two or more heating means (16) suited to subject said residual quantity of said first substance (4) to a heat treatment intended to make said residual quantity of said first substance (4) at least partially set,
- conveyor means (19a, 19b; 319a, 319b) suited to move said supporting element (12) provided with said embossed surface (2) near said laminar support (9) and to place said residual quantity of said first substance (4) in contact with said laminar support (9);
- pressing means (19, 341) suited to apply a pressure (P) to said supporting element (12) and/or to said laminar support (9) in such a way as to press said residual quantity of said first substance (4) against said laminar support (9);
- setting means (19a, 19b; 341) designed to make said first substance (4) set.

## Patentansprüche

1. Verfahren zur Herstellung eines Produkts (1; 1'), das einen laminaren Träger (9) und eine Veredelungsschicht (F) umfasst, wobei das Verfahren die folgenden Schritte umfasst:
a) Vorbereiten eines Trägerelements (12), das mit einer geprägten Oberfläche (2) versehen ist, die nicht glatt ist und Vorsprünge (52) und Hohlräume (54) umfasst;
b) Auftragen einer Schicht einer ersten Substanz (4) auf die geprägte Oberfläche (2), so dass die Vorsprünge (52) und die Hohlräume (54) bedeckt werden;
c) Ausführen eines Entfernungsvorgangs, um mindestens einen Teil der ersten Substanz (4) von der geprägten Oberfläche (2) zu entfernen, wobei eine Restmenge der ersten Substanz (4) auf der geprägten Oberfläche (2) verbleibt;
c1) Unterziehen der Restmenge der ersten Substanz (4) einer Wärmebehandlung, die dazu bestimmt ist, die Restmenge der ersten Substanz (4) nach dem Schritt c) und vor dem Schritt d) zumindest teilweise aushärten zu lassen,
d) Bewegen des mit der geprägten Oberfläche (2) versehenen Trägerelements (12) in die Nähe des laminaren Trägers (9) und Platzieren der Restmenge der ersten Substanz (4) in Kontakt mit dem laminaren Träger (9);
e) Ausüben eines Drucks (P) auf das Trägerelement (12) und/oder auf den laminaren Träger (9), um die Restmenge der ersten Substanz (4) gegen den laminaren Träger (9) zu drücken;
f) Lassen der Restmenge der ersten Substanz (4) aushärten;
g) Entfernen der geprägten Oberfläche (2) von der Restmenge der zuvor ausgehärteten ersten Substanz (4),
**dadurch gekennzeichnet, dass**
die Schritte b), c) und c1) zwei- oder mehrmals wiederholt werden, bevor die aufeinanderfolgenden Schritte durchgeführt werden.

2. Verfahren nach Anspruch 1, **dadurch gekennzeichnet, dass** der Vorgang des Entfernens der ersten Substanz (4) von der geprägten Oberfläche (2) das Entfernen der ersten Substanz (4) auf der Höhe der Vorsprünge (52) bewirkt, während die Restmenge der ersten Substanz (4) die Hohlräume (54) der geprägten Oberfläche (2) bedeckt.

3. Verfahren nach einem der vorhergehenden Ansprüche, **dadurch gekennzeichnet, dass** vor Schritt d) ein Schritt durchgeführt wird, in dem mindestens eine Schicht (10) einer zweiten Substanz (11) auf die zu bearbeitende Oberfläche (8) des laminaren Trägers (9) aufgetragen wird und die mindestens eine Schicht (10) der zweiten Substanz (11) so behandelt wird, dass die zweite Substanz (11) einen absoluten Feuchtigkeitswert aufweist, der zwischen 12% und 25% liegt, **wobei** in Schritt d) das mit der geprägten Oberfläche (2) versehene Trägerelement (12) in die Nähe des laminaren Trägers (9) bewegt wird und die Restmenge der ersten Substanz (4) in Kontakt mit der zweiten Substanz (11) gebracht wird.

4. Verfahren nach Anspruch 3, **dadurch gekennzeichnet, dass** Schritt f) das Aushärten der Verbindung zwischen der Restmenge der ersten Substanz (4) und der zweiten Substanz (11) umfasst.

5. Verfahren nach Anspruch 4, **dadurch gekennzeichnet, dass** Schritt g) das Entfernen der gesagten geprägten Oberfläche (2) von der zuvor ausgehärteten gesagten Restmenge der gesagten ersten Substanz (4) und der zweiten Substanz (11) umfasst.

6. Verfahren nach einem der Ansprüche 3 bis 5, **dadurch gekennzeichnet, dass** der absolute Feuchtigkeitswert zwischen 15 % und 23 % liegt, bevorzugter zwischen 17 % und 22 % liegt und noch bevorzugter gleich 18 % ist.

7. Verfahren nach einem der Ansprüche 3 bis 6, **dadurch gekennzeichnet, dass** der Vorgang des Behandelns der mindestens einen Schicht (10) der zweiten Substanz (11) derart, dass die zweite Substanz (11) den absoluten Feuchtigkeitswert aufweist, durch Erhitzen der zweiten Substanz (11) durchgeführt wird.

8. Verfahren nach einem der Ansprüche 3 bis 7, **dadurch gekennzeichnet, dass** ein Druck (P) auf das Trägerelement (12) und/oder auf den laminaren Träger (9) derart ausgeübt wird, dass die erste Substanz (4) gegen die zweite Substanz (11) gedrückt wird, wobei der Wert des Drucks (P) zwischen 10 atm und 50 atm liegt, vorzugsweise gleich 25 atm ist.

9. Verfahren nach einem der Ansprüche 4 bis 8, **dadurch gekennzeichnet, dass** der Aushärtungsschritt durch Erhitzen der ersten Substanz (4) und der zweiten Substanz (11) auf eine Temperatur (T) durchgeführt wird, **wobei** der Wert der Temperatur (T) zwischen 70°C und 100°C liegt, vorzugsweise gleich 80°C ist.

10. Verfahren nach einem der vorhergehenden Ansprüche, **dadurch gekennzeichnet, dass** die Schritte d), e) und f) gleichzeitig durchgeführt werden.

11. Verfahren nach einem der Ansprüche 1 bis 9, **dadurch gekennzeichnet, dass** die Schritte e) und f) nach Schritt d) durchgeführt werden.

12. Verfahren nach einem der vorhergehenden Ansprüche, **dadurch gekennzeichnet, dass** es einen weiteren Schritt des Aushärtens der ersten Substanz (4) nach den Schritten d), e) und f) umfasst.

13. Verfahren nach einem der vorhergehenden Ansprüche, **dadurch gekennzeichnet, dass** die erste Substanz (4) eine Substanz auf Polyurethanbasis umfasst.

14. Verfahren nach einem der Ansprüche 3 bis 13, **dadurch gekennzeichnet, dass** die zweite Substanz (11) eine Mischung aus Acryl- und Polyurethanharzen in wässriger Dispersion umfasst.

15. System zur Herstellung eines Produkts (1; 1'), das einen laminaren Träger (9) und eine Veredelungsschicht (F; F') umfasst, wobei das System umfasst:
- mindestens zwei oder mehr Auftragsmittel (14), die zum Auftragen mindestens einer Schicht einer ersten Substanz (4) auf die geprägte Oberfläche (2) eines Trägerelements (12) bestimmt sind;
- mindestens zwei oder mehr Entfernungsmittel (30), die dazu bestimmt sind, mindestens einen Teil der ersten Substanz (4) von der geprägten Oberfläche (2) zu entfernen, wobei eine Restmenge der ersten Substanz (4) auf der geprägten Oberfläche (2) verbleibt;
- mindestens zwei oder mehr Heizmittel (16), die geeignet sind, die Restmenge der ersten Substanz (4) einer Wärmebehandlung zu unterziehen, die dazu bestimmt ist, die Restmenge der ersten Substanz (4) zumindest teilweise aushärten zu lassen,
- Fördermittel (19a, 19b; 319a, 319b), die geeignet sind, das mit der geprägten Oberfläche (2) versehene Trägerelement (12) in die Nähe des laminaren Trägers (9) zu bewegen und die Restmenge der ersten Substanz (4) in Kontakt mit dem laminaren Träger (9) zu bringen;
- Druckmittel (19, 341), die geeignet sind, einen Druck (P) auf das Trägerelement (12) und/oder auf den laminaren Träger (9) auszuüben, um die Restmenge der ersten Substanz (4) gegen den laminaren Träger (9) zu drücken;
- Aushärtungsmittel (19a, 19b; 341), die dazu bestimmt sind, die erste Substanz (4) aushärten zu lassen.

## Revendications

1. Procédé de fabrication d'un produit (1 ; 1') comprenant un support laminaire (9) et une couche de mise à niveau (F), le procédé comprenant les étapes suivantes :
a) préparer un élément de support (12) pourvu d'une surface gaufrée (2) qui n'est pas lisse et comprend des saillies (52) et des cavités (54) ;
b) appliquer une couche d'une première substance (4) sur la surface gaufrée (2), de manière à recouvrir lesdites saillies (52) et lesdites cavités (54) ;
c) effectuer une opération d'enlèvement pour enlever au moins une partie de ladite première substance (4) de ladite surface gaufrée (2), en laissant une quantité résiduelle de ladite première substance (4) sur ladite surface gaufrée (2) ;
c1) soumettre ladite quantité résiduelle de ladite première substance (4) à un traitement thermique destiné à faire prendre ladite quantité résiduelle de ladite première substance (4) au moins partiellement après ladite étape c) et avant l'étape d),
d) déplacer ledit élément de support (12) pourvu de ladite surface gaufrée (2) près dudit support laminaire (9) et placer ladite quantité résiduelle de ladite première substance (4) en contact avec ledit support laminaire (9) ;
e) appliquer une pression (P) audit élément de support (12) et/ou audit support laminaire (9) de manière à presser ladite quantité résiduelle de ladite première substance (4) contre ledit support laminaire (9) ;
f) mettre en place ladite quantité résiduelle de ladite première substance (4) ;
g) retirer ladite surface gaufrée (2) de ladite quantité résiduelle de ladite première substance (4) préalablement fixée,
**caractérisé en ce que**
lesdites étapes b), c) et c1) sont répétées deux fois ou plus avant d'effectuer les étapes successives.

2. Procédé selon la revendication 1, **caractérisé en ce que** ladite opération d'enlèvement de ladite première substance (4) de ladite surface gaufrée (2) détermine l'enlèvement de ladite première substance (4) au niveau desdites saillies (52), tandis que ladite quantité résiduelle de ladite première substance (4) recouvre lesdites cavités (54) de ladite surface gaufrée (2).

3. Procédé selon l'une quelconque des revendications précédentes, **caractérisé en ce qu'**avant ladite étape d) on effectue une étape dans laquelle on applique au moins une couche (10) d'une seconde substance (11) sur la surface à finir (8) dudit support laminaire (9) et ladite au moins une couche (10) de ladite seconde substance (11) est traitée de manière à ce que ladite seconde substance (11) ait une valeur d'humidité absolue comprise entre 12 % et 25 %, **dans lequel** dans ladite étape d), ledit élément de support (12) pourvu de ladite surface gaufrée (2) est déplacé près dudit support laminaire (9) et ladite quantité résiduelle de ladite première substance (4) est placée en contact avec ladite seconde substance (11).

4. Procédé selon la revendication 3, **caractérisée en ce que** ladite étape f) comprend le réglage de l'union entre ladite quantité résiduelle de ladite première substance (4) et ladite seconde substance (11).

5. Procédé selon la revendication 4, **caractérisée en ce que** ladite étape g) comprend l'enlèvement de ladite surface gaufrée (2) de ladite quantité résiduelle préalablement fixée de ladite première substance (4) et de la seconde substance (11).

6. Procédé selon l'une quelconque des revendications de 3 à 5, **caractérisé en ce que** ladite valeur d'humidité absolue est comprise entre 15 % et 23 %, de préférence encore comprise entre 17 % et 22 % et encore plus de préférence égale à 18 %.

7. Procédé selon l'une quelconque des revendications de 3 à 6, **caractérisé en ce que** ladite opération de traitement de ladite au moins une couche (10) de ladite seconde substance (11) de manière à ce que ladite seconde substance (11) ayant ladite valeur d'humidité absolue soit effectuée en chauffant ladite seconde substance (11).

8. Procédé selon l'une quelconque des revendications de 3 à 7, **caractérisé en ce qu'**une pression (P) est appliquée audit élément de support (12) et/ou audit support laminaire (9) de manière à presser ladite première substance (4) contre ladite seconde substance (11), dans lequel la valeur de ladite pression (P) est comprise entre 10 atm et 50 atm, de préférence encore est égale à 25 atm.

9. Procédé selon l'une quelconque des revendications de 4 à 8, **caractérisé en ce que** ladite étape de définition est réalisée en chauffant ladite première substance (4) et ladite seconde substance (11) à une température (T), **dans lequel** la valeur de ladite température (T) est comprise entre 70°C et 100°C, plus de préférence est égale à 80°C.

10. Procédé selon l'une quelconque des revendications précédentes, **caractérisé en ce que** lesdites étapes d), e) et f) sont effectuées simultanément.

11. Procédé selon l'une quelconque des revendications de 1 à 9, **caractérisé en ce que** lesdites étapes e) et f) sont effectuées après ladite étape d).

12. Procédé selon l'une quelconque des revendications précédentes, **caractérisé en ce qu'**il comprend une étape supplémentaire de définition de ladite première substance (4) après lesdites étapes d), e) et f).

13. Procédé selon l'une quelconque des revendications précédentes, **caractérisé en ce que** ladite première substance (4) comprend une substance à base de polyuréthane.

14. Procédé selon l'une quelconque des revendications de 3 à 13, **caractérisé en ce que** ladite seconde substance (11) comprend un mélange de résines acryliques et polyuréthannes en dispersion aqueuse.

15. Système de fabrication d'un produit (1 ; 1') comprenant un support laminaire (9) et une couche de mise à niveau (F ; F'), le système comprenant :
- au moins deux ou plusieurs moyens d'application (14) conçus pour appliquer au moins une couche d'une première substance (4) sur la surface gaufrée (2) d'un élément de support (12) ;
- au moins deux ou plusieurs moyens d'enlèvement (30) conçus pour enlever au moins une partie de ladite première substance (4) de ladite surface gaufrée (2), en laissant une quantité résiduelle de ladite première substance (4) sur ladite surface gaufrée (2) ;
- au moins deux ou plusieurs moyens de chauffage (16) adaptés pour soumettre ladite quantité résiduelle de ladite première substance (4) à un traitement thermique destiné à faire prendre ladite quantité résiduelle de ladite première substance (4) au moins partiellement,
- des moyens de transport (19a, 19b ; 319a, 319b) adaptés pour déplacer ledit élément de support (12) pourvu de ladite surface gaufrée (2) à proximité dudit support laminaire (9) et à placer ladite quantité résiduelle de ladite première substance (4) en contact avec ledit support laminaire (9) ;
- des moyens de pression (19, 341) adaptés pour appliquer une pression (P) sur ledit élément de support (12) et/ou sur ledit support laminaire (9) de manière à presser ladite quantité résiduelle de ladite première substance (4) contre ledit support laminaire (9) ;
- des moyens de réglage (19a, 19b ; 341) destinés à faire prendre ladite première substance (4).
